(19) Europäisches Patentamt
European Patent Office
Office européen des brevets

(11) **EP 1 890 131 B1**

(12) **EUROPÄISCHE PATENTSCHRIFT**

(45) Veröffentlichungstag und Bekanntmachung des Hinweises auf die Patenterteilung:
**20.07.2011 Patentblatt 2011/29**

(51) Int Cl.:
***G01N 21/64*** *(2006.01)*

(21) Anmeldenummer: **07016209.4**

(22) Anmeldetag: **17.08.2007**

(54) **Verfahren zur Bestimmung der Laserstabilität von optischem Material**

Method for determining the laser stability of optical material

Procédé destiné à la détermination de la stabilité du laser de matériaux optiques

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.08.2006 DE 102006038902**

(43) Veröffentlichungstag der Anmeldung:
**20.02.2008 Patentblatt 2008/08**

(73) Patentinhaber: **Hellma Materials GmbH & Co. KG 07745 Jena (DE)**

(72) Erfinder:
• **Natura, Ute Dr.**
  **07743 Jena (DE)**
• **Keutel, Dietmar Dr.**
  **55126 Mainz (DE)**
• **Parthier, Lutz Dr.**
  **14532 Kleinmachnow (DE)**
• **Engel, Axel Dr.**
  **55218 Ingelheim (DE)**

(74) Vertreter: **Fritzsche, Thomas et al Fritzsche Patent Naupliastrasse 110 81545 München (DE)**

(56) Entgegenhaltungen:
• **KOZLOWSKI M R ET AL: "Luminescence investigation of SiO2 surfaces damaged by 0.35 mm laser illumination" PROCEEDINGS OF THE SPIE - THE INTERNATIONAL SOCIETY FOR OPTICAL ENGINEERING SPIE-INT. SOC. OPT. ENG USA, Bd. 3902, 2000, Seiten 138-144, XP002503904 ISSN: 0277-786X**
• **NEGRES R A ET AL: "Stoichiometric changes to KH2PO4 during laser-induced breakdown" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, Bd. 5647, Nr. 1, 21. Februar 2005 (2005-02-21), Seiten 306-312, XP002503905 ISSN: 0277-786X**
• **BURKERT A ET AL.: "Investigating the ArF laser stability of CaF2 at elevated fluences" PROCEEDINGS OF THE SPIE - THE INTERNATIONAL SOCIETY FOR OPTICAL ENGINEERING, Bd. 5878, Nr. 1, 18. August 2005 (2005-08-18), Seiten 58780E-1-58780E-8, XP002503907**
• **KRAJNOVICH D J ET AL: "SUDDEN ONSET OF STRONG ABSORPTION FOLLOWED BY FORCED RECOVERY IN KRF LASER-IRRADIATED FUSED SILICA" OPTICS LETTERS, OSA, OPTICAL SOCIETY OF AMERICA, WASHINGTON, DC, US, Bd. 18, Nr. 6, 15. März 1993 (1993-03-15), Seiten 453-455, XP002027756 ISSN: 0146-9592**
• **SCHERMERHORN P: "Excimer laser damage testing of optical materials" PROCEEDINGS OF THE SPIE - THE INTERNATIONAL SOCIETY FOR OPTICAL ENGINEERING USA, Bd. 1835, 1993, Seiten 70-79, XP002503906 ISSN: 0277-786X**
• **NEGRES R ET AL: "Evaluation of UV absorption coefficient in laser-modified fused silica" APPLIED PHYSICS LETTERS, AIP, AMERICAN INSTITUTE OF PHYSICS, MELVILLE, NY, Bd. 90, Nr. 6, 9. Februar 2007 (2007-02-09), Seiten 61115-061115, XP012095903 ISSN: 0003-6951**

**Beschreibung**

Die Erfindung betrifft ein Verfahren zur Evaluierung von geeignetem optischem Material für die Herstellung von optischen Elementen für energiereiche Strahlung sowie die Verwendung der mit dem Verfahren erhaltenen optischen Materialien.

Es ist bekannt, dass Materialien, aus denen optische Elemente hergestellt werden, ein sie durchstrahlendes Licht mehr oder weniger absorbieren, so dass die Intensität des Lichts bzw. einer Strahlung nach Durchtritt durch ein optisches Element regelmäßig geringer ist als zuvor. Dabei ist es auch bekannt, dass das Ausmaß dieser Absorption abhängig von der Wellenlänge des Lichtes ist. Für optische Systeme d. h. für optisch transparente Systeme wird jedoch angestrebt, die Absorption möglichst gering zu halten, d.h. diese sollen, zumindest für die jeweilige Arbeitswellenlänge eine hohe Lichtdurchlässigkeit bzw. Transmission aufweisen. Dabei setzt sich die Absorption aus materialspezifischen (intrinsischen) Anteilen und solchen Anteilen zusammen, die auf sog. nicht-intrinsische Anteile, wie z. B. Einschlüsse, Verunreinigung und/oder Kristallfehler, zurückzuführen sind. Während die intrinsische Absorption von der jeweiligen Qualität des Materials unabhängig ist, führt der zusätzliche nicht-intrinsische Anteil der Absorption von Strahlung zu einem Qualitätsverlust des optischen Materials.

Sowohl durch die intrinsische als auch durch die nicht-intrinsische Absorption wird Energie im optischen Material deponiert, was zu seiner Erwärmung führt. Eine derartige Erwärmung des Materials hat den Nachteil, dass sich die optischen Eigenschaften, wie der Brechungsindex, ändern, was z. B. in einem zur Strahlformung verwendeten optischen Bauteil zu einer Änderung der Abbildungsverhältnisse führt, da die Brechzahl nicht nur von der Wellenlänge des Lichtes sondern auch von der Temperatur des optischen Materials abhängt. Darüber hinaus führt eine Erwärmung in einem optischen Bauteil auch zu einer Änderung der Linsengeometrie. Diese Phänomene erzeugen eine Änderung des Linsenbrennpunktes, bzw. eine Unschärfe bei mit der erwärmten Linse projizierten Abbildungen. Dies führt insbesondere in der Photolithographie, wie sie zur Herstellung von Computerchips und elektronischen Schaltungen verwendet wird, zu einer Qualitätsverschlechterung bzw. zu einer Erhöhung des Ausschusses und ist somit unerwünscht.

Darüber hinaus hat es sich gezeigt, dass bei längerer Bestrahlung mit energiereichem Licht die Absorption des Materials mit der Zeit zunimmt. Dieser als Strahlenschaden bezeichnete Effekt setzt sich aus einem schneller auftretenden reversiblen Anteil (rapid damage) und einem sich langsamer ausbildenden irreversiblen Anteil zusammen. Beim schnellen Schaden wird ein Teil der absorbierten Strahlung nicht nur in Wärme umgewandelt, sondern in Form von Fluoreszenz wieder abgegeben. Die Ausbildung der Fluoreszenz an optischen Materialien, insbesondere an optischen Kristallen, ist an sich bekannt. So beschreiben beispielsweise W. Triebel et al. in (Proceedings SPIE Vol. 4103, S. 1-11, 2000 Triebel, Bark-Zollmann, Mühlig et al. in "Evaluation of Fused Silica for DUV Laser Applications by Short Time Diagnostics") die Entstehung und Messung von Laser-induzierter Fluoreszenz (LIF) in Quarz insbesondere in OH-reichem Quarz bzw. einer Glasmatrix und in (Proceedings SPIE Vol. 4932, S. 458-466 Mühlig, Triebel, Töpfer et al. In "Calcium fluoride for ArF laser lithography - characterization by in situ transmission and LIF measurements") Fluoreszenz- und Transmissionseigenschaften von CaF2. Des weiteren beschreiben M. Mizuguchi et al. in J. Vac. Sci. Technol. A., Vol. 16, Seite 2052 - 3057 (1998) die Ausbildung von optischen Absorptionsbanden in einem Calciumfluorid-Kristall. Des weiteren beschreibt M. Mizuguchi et al. in J. Opt. Soc. Am. B, Vol. 16, Seite 1153 - 1159, Juli 1999 eine Zeit-aufgelöste Photolumineszenz zur Diagnose eines Laserschadens an einem Calciumfluorid-Kristall. Dort wird die Ausbildung von Photolumineszenz bildenden Farbzentren durch Anregung mit einem ArF-Excimer-Laser bei 193 nm beschrieben. Damit derartige Messungen jedoch möglich sind, werden hier Kristalle mit relativ hohen Verunreinigungen verwendet, die den hohen Anforderungen der Photolithographie nicht genügen. Darüber hinaus wird die Fluoreszenzmessung in einem Zeitraum von insgesamt 50 nsec. innerhalb und nach Beendigung des Laserimpulses in der zu untersuchenden Probe durchgeführt. Es hat sich nun gezeigt, dass die so erhaltenen Fluoreszenzwerte sich nicht zur Qualitätskontrolle bzw. zur Bestimmung des Ausmaßes der Verunreinigung, und damit auch zur Ausbildung von Farbzentren in den Kristallen hoher Qualität verwenden lassen.

Da die Herstellung einer gesamten Optik aus einem optischen Rohling sehr aufwändig und mit hohen Kosten verbunden ist, besteht Bedarf, bereits zu einem frühen Zeitpunkt, d. h. vor der Bearbeitung des Rohlings, einen beim späteren Gebrauch der Optik entstehenden Strahlenschaden zu erkennen und so ungeeignetes Material zu verwerfen. Es ist bereits versucht worden, derartige Strahlenschäden mittels einer laserinduzierten Fluoreszenz zu bestimmen. So beschreibt beispielsweise die WO2004/027395 ein Verfahren zur Bestimmung der nicht-intrinsischen Fluoreszenz an einem optischen Material. Dabei wird die Fluoreszenz am optischen Material direkt, d. h. unmittelbar nach einer Vorbestrahlung mit Licht einer Anregungswellenlänge von 193 nm bzw. 157 nm durch Anregung mit demselben Laser bestimmt, mit dem auch die Vorbestrahlung durchgeführt wird.

In der DE 103 35 457 A1 ist ein Verfahren zur quantitativen Bestimmung der Eignung von optischen Materialien beschrieben. Dabei wird die energiedichteabhängige Transmission bei Wellenlängen im UV dadurch ermittelt, dass ein Gleichgewichtswert für die Transmission bei verschieden Fluenzen bestimmt wird und die Steigung der Kurve dT/dH für diese Probe ermittelt und mit den Fluoreszenzeigenschaften verglichen wird.

Mittels der zuvor erwähnten Verfahren kann bereits zu einem frühen Herstellungszeitpunkt laserstabiles Material evaluiert werden. Gegenwärtig in der Entwicklung befindliche photolithographische Belichtungseinrichtungen benötigen in ihren Beleuchtungsoptiken bzw. dem darin verwendeten Laser bzw. Strahlführungssystem Material, welches besonders laserstabil ist. Diese Anforderungen resultieren aus den Produktivitätsanforderungen an derartige Geräte, die sich durch Erhöhung der Laserleistung und damit einhergehend der Energiedichte gut steigern lassen. Die Sensitivität der vorgenannten kurzzeitigen Messverfahren zur Vorevaluierung von geeignetem optischen Rohmaterial reicht daher nicht mehr aus, um laserstabile Proben von ganz besonders laserstabilen Proben zu unterscheiden.

Material, das je nach späterer Verwendung sehr gute Eigenschaften aufweisen sollte, musste daher bislang stets in einem Langzeittest geprüft werden. Erst wenn das Material diesen Langzeittest bestanden hatte, konnte es entsprechend weiter verarbeitet werden. Typische Prüfbedingungen für einen solchen Langzeittest sind beispielsweise Bestrahlung mit einem 193 nm Excimer-Laser mit einer Repetitionsrate $\geq$ 1000 Hz bei einer Energiedichte pro Puls von 15 mJ/cm$^2$ und einer Gesamtpulszahl von ca. 10$^9$ Pulsen. Dies bedeutet eine Messdauer von ca. 11,5 Tagen.

Die Erfindung hat daher zum Ziel, ein verbessertes Evaluierungsverfahren bereitzustellen, mit dem laserstabiles und besonders laserstabiles Material bestimmt werden kann und mit dem insbesondere Proben von laserstabilem und besonders laserstabilem Material unterscheidbar werden. Die Erfindung hat außerdem zum Ziel, ein derartiges Verfahren zur kurzzeitigen Bestimmung bereitzustellen.

Dieses Ziel wird durch das in den Ansprüchen definierte Verfahren erreicht.

Erfindungsgemäß wurde nämlich gefunden, dass sich die im Wellenlängenbereich 350-700 nm angeregte Fluoreszenz nach dem Ende der Vorbestrahlung noch verändert. Im erfindungsgemäßen Verfahren wird daher die Fluoreszenz nicht wie bislang üblich nur unmittelbar nach der Vorbestrahlung und mit der auch zur Vorbestrahlung verwendeten Wellenlänge bestimmt. Erfindungsgemäß wird eine erste Messung unmittelbar nach der Vorbestrahlung und eine zweite Messung nach einer gewissen Zeit, mindestens 10 Minuten, insbesonders mindestens 15 bzw. 20 Minuten und speziell mindestens 30 Minuten durchgeführt. So wird das Zunehmen der Fluoreszenz nach Ende der Vorbestrahlung bestimmt. Darüber hinaus wird außerdem die Fluoreszenz nicht mit dem gleichen energiereichen Licht erzeugt, das auch zur Vorbestrahlung verwendet wird, sondern mit Licht einer Wellenlänge zwischen 350-700 nm. Im Rahmen der Erfindung durchgeführte Untersuchungen haben nämlich gezeigt, dass nach Bestrahlung mit energiereichem Licht die im Material deponierte Energie über einen langen Zeitraum zur Ausbildung von neuen, im unbestrahlten Kristall nicht vorliegenden Natrium-stabilisierten F-Zentren führt. Diese Natrium-stabilisierten F-Zentren lassen sich nun durch weitere Bestrahlung mit anderen Wellenlängen anregen und gehen durch Aussenden einer Fluoreszenz in ihren Grundzustand über.

Erfindungsgemäß wurde nämlich auch gefunden, dass die Ausbildung dieses Natrium-stabilisierten F-Zentrums eine außergewöhnlich langsame Bildungskonstante ($k = 1/\tau$ mit $\tau \geq 10$ min) aufweist, was zu einem Ansteigen der Fluoreszenz bis mindestens 10, insbesondere bis mindestens 20, vorzugsweise bis mindestens 30 min nach Ende der Vorbestrahlung führt.

Die Erzeugung eines Strahlenschadens (rapid damage) erfolgt üblicherweise mittels energiereicher Strahlung. Geeignete Lichtquellen hierfür sind beispielsweise Röntgenstrahlung, Neutronenstrahlung sowie energiereiche Laser wie beispielsweise ein Excimer-Laser mit einer Energiedichte von $\geq$5 mJ/cm$^2$, z.B. 5- >100), dessen Arbeitswellenlänge im Bereich 150-240 nm liegt. Ein bevorzugter Laser ist beispielsweise ein ArF-Excimerlaser mit einer Wellenlänge von 193 nm. Die Bestrahlung wird vorzugsweise solange durchgeführt, bis ausreichend Natrium-stabilisierte F-Zentren gebildet sind, was spätestens mit Erreichen des Gleichgewichtswertes der Transmission erreicht ist. Dieser wird üblicherweise durch Beschuss mit ca. 10.000 Pulsen eines ArF-Lasers (10 mJ/cm$^2$) erreicht. Der Gleichgewichtswert der Transmission ist daran zu erkennen, dass sich die Transmission während Bestrahlung nicht mehr messbar ändert. Der Gleichgewichtswert wird bei Energiedichten $\geq$ bzw. > 10 mJ/cm$^2$ mit weniger als 3000 Pulsen, meistens mit 200 bis 2000 Pulsen, bei Energiedichten < 10 mJ/cm$^2$ mit mehr als 200, insbesondere mehr als 2000 bis 3000 Pulsen erreicht. Nach Beendigung dieser Vorbestrahlung erfolgt eine erste Messung der Fluoreszenz direkt nach Vorbestrahlung. Die Messung erfolgt typisch 3 bis 5 Sekunden nach Ende der Vorbestrahlung und dauert üblicherweise 1 Sekunde. Bis zur abschließenden zweiten Messung der Fluoreszenz (gleiche Messdauer) wird mindestens 10 Minuten, vorzugsweise mindestens 20 Minuten gewartet. In Einzelfällen hat es sich als zweckmäßig erwiesen, mindestens 30, ggf. sogar mindestens 50 Minuten zu warten. Es hat sich jedoch gezeigt, dass die zweite Messung der Fluoreszenz nicht später als 15 Stunden, insbesondere nicht später als 10 Stunden nach Ende der Vorbestrahlung erfolgen sollte, da sich dann bereits Relaxationsprozesse bemerkbar machen, welche das Messergebnis verfälschen. Typischerweise wird daher die zweite Messung nicht später als 8 Stunden nach Ende der Vorbestrahlung durchgeführt.

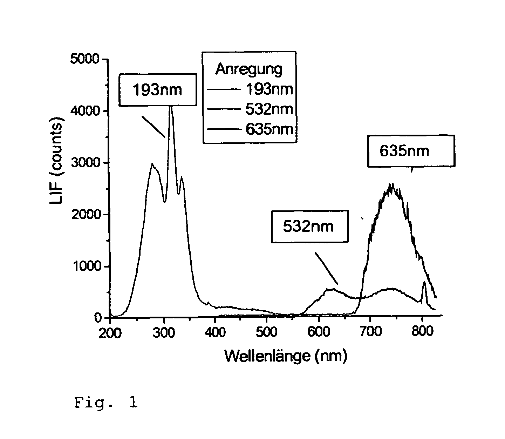

Fig. 1 zeigt, dass bereits bei laserstabilen Proben bei ausschließlicher Vorbestrahlung und Messung bei 193 nm (schwarze Kurve mit hohen Peaks bei 280-360 nm) im Bereich 550-810 nm nahezu keine Fluoreszenz feststellbar ist. Erfindungsgemäß (rote Kurve mit niedrigen Peaks bei 532, 600-800 nm) lässt sich diese noch gut auswerten. In dieser Figur sind in der Ordinate dimensionslose counts angegeben, die durch Justage und Kalibrierungen in ihren Absolutwerten von Messaufbau zu Messaufbau variieren können, deren qualitativer Verlauf jedoch gleich bleibt. Auch ist der Unterschied zwischen traditioneller Messung (schwarz) und erfindungsgemäßer Messung (rot) von Messaufbau zu Messaufbau stets vorhanden.

Aus dem Stand der Technik ist zwar bekannt, dass sich die Empfindlichkeit der Messung der Fluoreszenz bei einer Wellenlänge zwischen 550 und 810 nm noch weiter steigern lässt, wenn diese Fluoreszenz nach einer Vorbestrahlung mit kurzwelligem UV-Licht gemessen wird. Neu entsprechend vorliegender Erfindung ist jedoch, dass die Anregungswellenlänge für die Messung nicht die der Vorbestrahlung ist, sondern indem bei der Messung mit einer Wellenlänge zwischen 460 und 700, insbesonders zwischen 500 und 650 angeregt wird, wobei Anregungswellenlängen zwischen 530 und 635 besonders bevorzugt sind. Besonders bevorzugt ist eine Anregung bei den Wellenlängen 532 , 633 nm oder 635 nm. Durch Anregung mit einer Wellenlänge von < 600 nm ist darüber hinaus eine Fluoreszenzbande bei 630 nm gut erkennbar. Ein Spektrum, das mit einer besonders bevorzugten Anregung bei 532 nm erhalten wurde, zeigt ebenso die rote Kurve in Figur 1.

Als besonders zweckmäßig haben sich die Anregungen mittels eines Helium-Neon-Lasers bei 633 nm oder mittels Laserdiode bei 635 nm(beides rote Laserbestrahlung, RLIF) und bei 532 nm mit einem Dioden gepumpten Feststofflaser (DPSS-Laser, grüne Laserbestrahlung, GLIF) erwiesen. Dabei ist die Anregung mittels des Helium-Neon-Lasers 633 nm oder mittels Lasersiode 635 nm um einen Faktor 4 sensitiver als die Anregung bei 532 nm. Prinzipiell ist das Fluoreszenzsignal zur eingestrahlten Laserleistung annähernd linear.

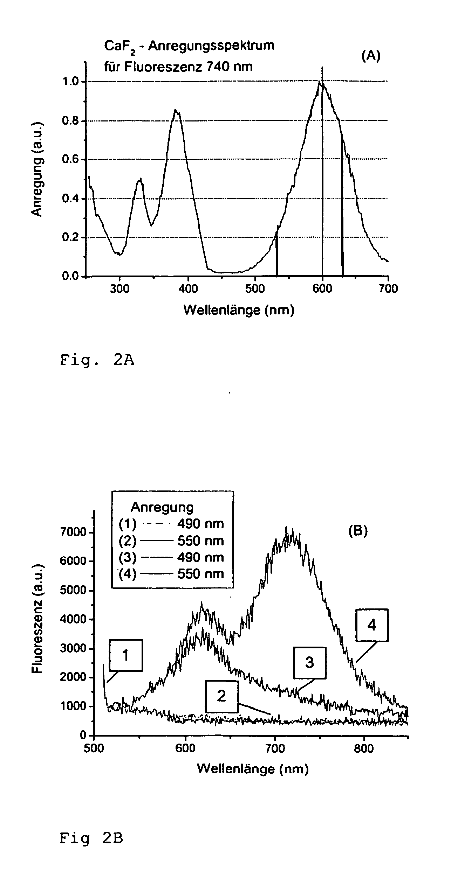

Fig. 2A zeigt bei 532 nm bzw. bei 633 nm die beiden besonders bevorzugten Anregungswellenlängen im Anregungsspektrum für die Fluoreszenzwellenlänge 740 nm. Bei der Anregungswellenlänge 633 nm wird dabei eine Sensitivitätsverbesserung um den Faktor 4 gegenüber der Anregung bei 532 nm erreicht.

Fig. 2B zeigt, dass je nach Anregung die beiden bevorzugt auswertbaren Peaks (630 nm, 740 nm) gezielt angeregt werden können.

Erfindungsgemäß wurde auch gefunden, dass sich besonders laserstabiles Material dadurch auszeichnet, dass sich die Fluoreszenz nach Beendigung der Vorbestrahlung nicht oder nur geringfügig ändert. Im Gegensatz dazu zeigt eine weniger laserstabile Probe schon nach einer Wartezeit bis zur zweiten Messung nach Ende der Vorbestrahlung von 10 Minuten bzw. 20 Minuten bzw. 30 bis 50 Minuten nach Beendigung der Vorbestrahlung eine deutliche Zunahme der jeweiligen Fluoreszenzbanden bei 630 und 740 nm im Vergleich zur ersten Messung.

Diese beiden Banden innerhalb des Wellenlängenbereiches 550 nm bis 810 nm sind als Messwellenlängen besonders geeignet, wobei sich im Falle der Messung von $CaF_2$ die Wellenlänge von 740 nm besonders geeignet erwiesen hat.

Im Gegensatz zu einer laserstabilen Probe wird bei den erfindungsgemäß zu evaluierenden besonders laserstabilen Proben unter gleichen Bedingungen nur eine geringe Zunahme der jeweiligen Fluoreszenzbanden bei 630 und 740 nm im Vergleich zur ersten Messung festgestellt.

Durch Bestimmung dieser Fluoreszenzänderung nach einer Wartezeit von mindestens 10-30 Minuten lassen sich laserstabile und besonders laserstabile Materialien bereits im Vorfeld der Bearbeitung auffinden.

Dabei wird wie folgt vorgegangen:

1. Vorbestrahlung der Probe z.B. mit einem ArF Excimerlaser

2. Unmittelbar danach: Durchführung einer 1. Messung der Fluoreszenz bei einer Wellenlänge λ1 im Bereich 580-810nm welche mit einer Wellenlänge λ2 im Bereich 460-700 angeregt wird

3. Nach einer Wartezeit von mindestens 10min und höchstens 15 Stunden: Durchführung einer 2. Messung der Fluoreszenz bei einer Wellenlänge λ1 im Bereich 580-810 nm welche mit einer Wellenlänge λ2 im Bereich 460-700 angeregt wird

Aus beiden Messwerten wird die Zunahme Z berechnet indem entsprechend nachfolgender Formel die Differenz beider Messwerte gebildet und diese auf die 2. Messung normiert wird:

$$Z = \frac{(I_{2,\lambda1,\lambda2} - I_{1,\lambda1,\lambda2})}{I_{2,\lambda1,\lambda2}}$$

Bei besonders laserstabilen CaF2-Proben beträgt der Wert Z bei einer Anregungswellenlänge λ1a von 532 nm bzw. λ1b von 633nm oder 635nm und einer Messwellenlänge der Fluoreszenz λ2 von 740 nm maximal 0,3.

Mit diesem Verfahren ist es sogar möglich, nichteinkristalline Vorprodukte wie beispielsweise in der DE 10 2004 003829 beschrieben Calciumfluoridingots bereits vor ihrer Zucht zum endgültigen großvolumigen Einkristall auf die spätere Laserfestigkeit zu testen. Es ist daher bereits möglich, vor der aufwendigen, mehrere Monate dauernden Zucht besonders geeignetes Material zu evaluieren. Erfindungsgemäß wird dabei in den gleichen drei Schritten vorgegangen und unter Verwendung der gleichen Formel der Wert Z bestimmt. Im Falle des Materials CaF2 wird der 2. Messwert dabei nach einer Wartezeit von mindestens 10 Minuten, vorzugsweise nach mindestens 30 Minuten nach der Vorbestrahlung bestimmt. Die Anregung erfolgt bei beiden Messungen bei den Wellenlängen λ1a = 532nm bzw. λ1b = 633nm oder 635nm und beide Messungen erfolgen bei einer Messwellenlänge der Fluoreszenz λ2 = 740nm. Beträgt der Wert Z weniger als 0,3, dann sind die jeweiligen Proben besonders laserstabil. Infolge des Messfehlers (+/- 150 counts, ab 1500 counts 10%) sind Proben, die bei der 1. und 2. Messung ein Signal < 400 counts zeigen, generell besonders laserstabil.

Nach Eichung der Messanordnung ist anstelle bzw. zusätzlich zur Bewertung nach dem Z-Wert der Vergleich der absoluten Messwerte der 2. Messung von Probe zu Probe bzw. von Probe zu einer Vergleichsprobe passender Laserfestigkeitsklasse sinnvoll.

In einer zweckmäßigen Durchführung des Verfahrens wird die jeweils gemessene Fluoreszenz mit der Fluoreszenz einer Vergleichsprobe und einer für den geplanten Verwendungszweck geeigneten Laserstabilität verglichen. Dabei werden beide Proben unter gleichen Bedingungen, d. h. bei gleicher Wellenlänge und gleicher eingestrahlter Energiedichte unterworfen. Als Vergleichsprobe wird für die Klassifizierung der Messprobe als laserstabil üblicherweise eine Probe verwendet, welche bei einer Fluoreszenzmessung nach dem Stand der Technik bei 193nm Anregung nach Vorbestrahlung gerade noch eine im Rauschen der Messapparatur feststellbare Bande bei 740nm aufweist. Für diese wurde die Laserfestigkeit unter Einsatzbedingungen beispielsweise mit dem zuvor beschriebenen Dauerbeschuss von energiereicher Strahlung bestimmt.

Das erfindungsgemäße Verfahren wird also angewendet, um die Laserfestigkeit von Proben zu ermitteln, bei denen bei einer Fluoreszenzmessung nach dem Stand der Technik bei 193nm Anregung nach Vorbestrahlung gerade noch eine im Rauschen der Messapparatur feststellbare Bande bei 740nm oder keine Bande bei 740nm feststellbar ist und eine durch Messwerte hinterlegte Einstufung in laserstabil und besonders laserstabil nicht möglich ist. Dieses Erfordernis nach Anwendung des erfindungsgemäßen Verfahrens ist gegeben, wenn nach dem Stand der Technik ein Peak von ≤ 15 counts festzustellen ist, was etwa dem Messfehler entspricht.

Die erfindungsgemäß bestimmten optischen Materialien eignen sich besonders zur Herstellung von optischen Komponenten in der DUV-Lithographie, sowie zur Herstellung von mit Photolack beschichteten Wafern und somit zur Herstellung von elektronischen Geräten. Die Erfindung betrifft daher auch die Verwendung der mittels des erfindungsgemäßen Verfahrens und/oder des erfindungsgemäßen Kristalls erhaltenen Materialien zur Herstellung von Linsen, Prismen, Lichtleitstäben, optischen Fenstern sowie optischen Geräten für die DUV-Lithographie, insbesondere zur Herstellung von Steppern und Excimer-Lasern und somit auch zur Herstellung von integrierten Schaltungen, Computerchips sowie elektronischer Geräte wie Computern sowie anderer Geräte, welche chipartige integrierte Schaltungen enthalten.

Die Erfindung soll an den folgenden Beispielen näher erläutert werden.

Beispiel 1:

Aus einem aus Calciumfluoridpulver eingeschmolzenen polykristallinen Ingot wurde ein 3cm x 3cm großes Stück herausgebrochen. Diese Kristallprobe wurde in einer Halterung mit einem ArF-Excimer-Laser mit 30 mJ/cm2 mit ca. 10.000 Pulsen bestrahlt (3 Minuten bei 60 Hz). Anschließend wurde sofort nach Vorbestrahlung und nach einer Wartezeit von 20 Minuten die Probe mittels eines He-Ne-Lasers von 633 nm (RLIF) sowie eines Dioden gepumpten Feststofflasers (DPSS-Lasers) bei 532 nm (GLIF) bestrahlt und die Intensität der Fluoreszenz bei 740nm mittels einer CCD-Kamera (Spektrometersystem mit CCD als Detektor) bestimmt. Die Bestimmung erfolgte mittels einer CCD-Kamera wie dies in der bereits erwähnten WO2004/027395 beschrieben ist. Nach der Gleichung

$$Z = \frac{(I_{2,\lambda1,\lambda2} - I_{1,\lambda1,\lambda2})}{I_{2,\lambda1,\lambda2}}$$

wird der normierte Wert Z berechnet.
Für verschiedene CaF2-Proben wurden bei Anregung mit
$\lambda_{1a}$=532nm bzw. $\lambda_{1b}$=635 nm folgende Messergebnisse erhalten:

| Probe | $\lambda_{1a}$=532nm, $\lambda_2$=740nm | | | $\lambda_{1a}$=635nm, $\lambda_2$=740nm | | |
|---|---|---|---|---|---|---|
| | 1.Mess. counts | 2.Mess. counts | Z | 1.Mess. counts | 2.Mess. counts | Z |
| 1 | 180 | 190 | 0,05 | 380 | 410 | 0,07 |
| 2 | 500 | 3200 | 0,84 | 2000 | 14500 | 0,86 |
| 3 | 500 | 2000 | 0,75 | 1050 | 6400 | 0,85 |
| 4 | 175 | 500 | 0,65 | | | |

(fortgesetzt)

| Probe | λ$_{1a}$=532nm, λ$_2$=740nm | | | λ$_{1a}$=635nm, λ$_2$=740nm | | |
|---|---|---|---|---|---|---|
| | 1.Mess. counts | 2.Mess. counts | Z | 1.Mess. counts | 2.Mess. counts | Z |
| 5 | 80 | 100 | 0,2 | | | |

Beispiel 2:

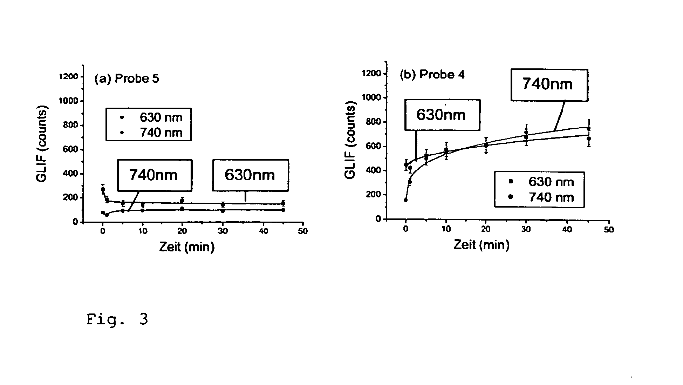

Ein wie zuvor erhaltener CaF$_2$-Kristall wurde mit einer Energiedichte von 10 mJ/cm2 eines ArF-Lasers und einer Pulszahl von 10.000 sowie einer Repetitionsrate von 60 Hz vorbestrahlt. Anschließend wurde diese Probe mit einem grünen Feststofflaser der Wellenlänge 532 nm bestrahlt und die Fluoreszenz direkt nach der Vorbestrahlung, nach 1, 5, 10, 20, 30 und 45 Minuten bestimmt. Die Intensität der Fluoreszenz bei den Wellenlängen 630 und 740 nm wurde bestimmt. Die Ergebnisse sind in der beiliegenden Fig. 3 angegeben.

**Patentansprüche**

1. Verfahren zur Bestimmung der Laserstabilität von einem CaF$_2$-Kristall für die Herstellung von optischen Elementen, insbesondere zur Durchstrahlung mit energiereichem Licht, umfassend ein Vorbestrahlen des Kristalls zur Erzeugung eines Strahlenschadens und Bestimmen einer induzierten nicht-intrinsischen Fluoreszenz, **dadurch gekennzeichnet, dass** bei einer ersten Messung direkt nach Vorbestrahlung und bei einer zweiten Messung nach mindestens 10 Minuten nach dem Ende der Vorbestrahlung die induzierte Fluoreszenz mit Licht einer Wellenlänge zwischen 350-700 nm angeregt und die Intensität dieser Fluoreszenz zwischen 550 und 810 nm bestimmt und bei einer oder mehreren Wellenlängen in diesem Bereich quantitativ ausgewertet wird und mittels der Änderung dieser Fluoreszenz zwischen der zweiten und ersten Messung die Laserstabilität ermittelt wird.

2. Verfahren nach Anspruch 1, **dadurch gekennzeichnet, dass** die Fluoreszenz durch Bestrahlen des optischen Materials mit Wellenlängen zwischen 350-430 und/oder zwischen 500 und 700 nm angeregt wird.

3. Verfahren nach Anspruch 1, **dadurch gekennzeichnet, dass** die Vorbestrahlung mit Lasern im Wellenlängenbereich 150 nm bis 240 nm, vorzugsweise mit dem ArF-Excimerlaser bei 193 nm erfolgt.

4. Verfahren nach einem der vorhergehenden Ansprüche, **dadurch gekennzeichnet, dass** die Intensität der Fluoreszenz bei einer Wellenlänge zwischen 580 und 810 und/oder zwischen 680 und 810 nm bestimmt wird.

5. Verfahren nach einem der vorhergehenden Ansprüche, **dadurch gekennzeichnet, dass** die Fluoreszenz nach Beendigung der Vorbestrahlung ein erstes Mal unmittelbar nach Ende der Vorbestrahlung und ein zweites Mal nach einer Wartezeit von höchstens 15 Stunden ermittelt wird.

6. Verfahren nach einem der Ansprüche 1 bis 5, **dadurch gekennzeichnet, dass** die erhaltenen Materialien zur Herstellung von Linsen, Prismen, Lichtleitstäben, optischen Fenstern sowie optischen Geräten für die DUV-Lithographie, zur Herstellung von Steppern und Excimer-Lasern und auch zur Herstellung von integrierten Schaltungen, Computerchips sowie elektronischer Geräte wie Computern sowie anderer Geräte, welche chipartige integrierte Schaltungen enthalten, verwendet werden.

**Claims**

1. Method for determining the laser stability of a CaF$_2$ crystal for producing optical elements, in particular for irradiation with high-energy light, comprising preliminary irradiation of the crystal in order to produce radiation damage, and determination of an induced non-intrinsic fluorescence, **characterized in that**, upon a first measurement directly after preliminary irradiation, and upon a second measurement from at least 10 minutes after the end of the preliminary irradiation, the induced fluorescence is excited by light of a wavelength between 350 and 700 nm, and the intensity of this fluorescence is determined between 550 and 810 nm and is evaluated quantitatively at one or more wavelengths in this region, and the laser stability is determined by means of the change in this fluorescence between the first and second measurements.

**2.** Method according to Claim 1, **characterized in that** the fluorescence is excited by irradiation of the optical material with wavelengths between 350 and 430 and/or between 500 and 700 nm.

**3.** Method according to Claim 1, **characterized in that** the preliminary irradiation is performed with lasers in the wavelength region of 150 nm to 240 nm, preferably with the ArF excimer laser at 193 nm.

**4.** Method according to one of the preceding claims, **characterized in that** the intensity of the fluorescence is determined at a wavelength between 580 and 810 nm and/or between 680 and 810 nm.

**5.** Method according to one of the preceding claims, **characterized in that** the fluorescence is determined after termination of the preliminary irradiation for a first time directly following the end of the preliminary irradiation, and for the second time following a waiting time of at most 15 hours.

**6.** Method according to one of Claims 1 to 5, **characterized in that** the materials obtained are used to produce lenses, prisms, light guide rods, optical windows and optical devices for DUV lithography for producing steppers and excimer lasers, and also for producing integrated circuits, computer chips and electronic devices such as computers and other devices which contain chip-like integrated circuits.

## Revendications

**1.** Procédé destiné à la détermination de la stabilité laser d'un cristal de $CaF_2$ pour la fabrication d'éléments optiques, notamment pour la transmission de lumière fortement énergétique, comprenant une pré-irradiation du cristal afin de produire un défaut par irradiation et la détermination d'une fluorescence induite non intrinsèque, **caractérisé en ce que**, lors d'une première mesure effectuée immédiatement après la pré-irradiation et lors d'une deuxième mesure effectuée au bout d'au moins 10 minutes après la fin de la pré-irradiation, la fluorescence induite est excitée par une lumière ayant une longueur d'onde comprise entre 350 et 700 nm, **en ce que** l'intensité de cette fluorescence est déterminée entre 550 et 810 nm et est évaluée quantitativement à une ou plusieurs longueurs d'ondes dans ce domaine, et **en ce que** la stabilité laser est obtenue à partir de la variation de cette fluorescence entre les deuxième et première mesures.

**2.** Procédé selon la revendication 1, **caractérisé en ce que** la fluorescence est excitée par irradiation du matériau optique à des longueurs d'onde comprises entre 350 et 430 et/ou entre 500 et 700 nm.

**3.** Procédé selon la revendication 1, **caractérisé en ce que** la pré-irradiation est effectuée au moyen de lasers fonctionnant dans la région de longueur d'onde de 150 nm à 240 nm et de préférence, au moyen d'un laser excimère ArF à 193 nm.

**4.** Procédé selon l'une des revendications précédentes, **caractérisé en ce que** l'intensité de la fluorescence est déterminée à une longueur d'onde comprise entre 580 et 810 et/ou entre 680 et 810 nm.

**5.** Procédé selon l'une des revendications précédentes, **caractérisé en ce que** la fluorescence est obtenue après la fin de la pré-irradiation, une première fois immédiatement après la fin de la pré-irradiation et une deuxième après un temps d'attente d'au plus 15 heures.

**6.** Procédé selon l'une des revendications 1 à 5, **caractérisé en ce que** les matériaux obtenus sont utilisés pour la fabrication de lentilles, de prismes, de tiges de guidage optique, de fenêtres optiques ainsi que d'appareils optiques pour la lithographie DUV, pour la fabrication d'équipements de positionnement et de lasers excimères ainsi que pour la fabrication de circuits intégrés, de puces d'ordinateurs, et d'appareils électroniques tels que des ordinateurs et d'autres appareils comportant des circuits intégrés du type puce.

Fig. 1

Fig. 2A

Fig 2B

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004027395 A
- DE 10335457 A1
- DE 102004003829

**In der Beschreibung aufgeführte Nicht-Patentliteratur**

- **TRIEBEL ; BARK-ZOLLMANN ; MÜHLIG et al.** Evaluation of Fused Silica for DUV Laser Applications by Short Time Diagnostics. *Proceedings SPIE,* 2000, vol. 4103, 1-11
- **MÜHLIG ; TRIEBEL ; TÖPFER et al.** Calcium fluoride for ArF laser lithography - characterization by in situ transmission and LIF measurements. *Proceedings SPIE,* vol. 4932, 458-466
- **M. MIZUGUCHI et al.** *J. Vac. Sci. Technol. A,* 1998, vol. 16, 2052-3057
- **M. MIZUGUCHI et al.** *J. Opt. Soc. Am. B,* Juli 1999, vol. 16, 1153-1159